# EUROPEAN PATENT APPLICATION

(11) **EP 4 513 222 A1**
(43) Date of publication of application: **26.02.2025**
(21) Application number: 23382867.2
(22) Date of filing: 24.08.2023
(51) Int. Cl.: G01S 5/16, G01C 11/02, G06T 7/70

(54) **SYSTEM AND METHOD FOR OBTAINING THE TRAJECTORY OF AN OBJECT**

(71) Applicant: Instituto Nacional De Tecnica Aeroespacial "Esteban Terradas", 28850 Torrejón de Ardoz (ES)
(72) Inventor: MILLET COLL, Vicente, 28850 Torrejón de Ardoz (ES); GONZÁLEZ CANO, Daniel, 28850 Torrejón de Ardoz (ES); SÁNCHEZ MARTÍ, Alfonso, 28850 Torrejón de Ardoz (ES); MARTÍN FERNÁNDEZ, David, 28850 Torrejón de Ardoz (ES)
(74) Representative: TRBL Intellectual Property

(57) **Abstract**

The invention provides a system for optic trajectory obtention comprising a control station (1), at least two measuring units (2, 9). Each measuring unit (2, 9) comprises a pedestal (3) and an operation element (4). Each pedestal (3) comprises a two-angle angular positioner, a camera with a lens and a support structure. Each operation element (4) comprises a Programable Logic Controller, a Single Board Computer and a timer circuit. The Programable Logic Controller is configured to control the positioner, to receive angles data from the positioner, to receive image data from the camera and to send angles data and image data to the Single Board Computer. The timer circuit is configured to receive time information and assign a time stamp to the angles data and to the image data and wherein the Single Board Computer is configured to receive angles data with the time stamp and image data with the time stamp and send the angles data and the image data with their time stamps to the control. The control station (1) comprises receiving means to receive information from the Single Board Computer of each operation element and a software configured to run an algorithm configured to calculate a position of an object from the data received from the Single Board Computer of each operation element, wherein the control station is configured to create a reference system comprising the position of each measuring unit.

## Description

### TECHNICAL FIELD

This invention belongs to the field of systems for calculating the trajectory of an object.

### STATE OF THE ART

Systems for calculating the trajectory of objects are widely known. These systems usually employ very heavy units, which need to be specifically installed in the ground to ensure the precision in the operation and calculation of the position of the target.

These systems usually employ a pan-tilt angular positioner and a lens in combination with a camera element (which can be replaced by a radar or laser positioner) which provides the distance between the object and the angular positioner. With these data (angles and distance) the position of the object is calculated and, by repeating these steps in time, a trajectory can be obtained.

However, these systems are very heavy and need very complex calibration processes. Further, they cannot be easily transported and installed in any location, but only in those locations which fulfil demanding conditions.

### DESCRIPTION OF THE INVENTION

The invention provides an alternative solution for trajectory calculation by means of a system according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a system for optic trajectory obtention comprising a control station, at least two measuring units, wherein
each measuring unit comprises a pedestal and an operation element;
each pedestal comprises a two-angle angular positioner, a camera with a lens and a support structure;
each operation element comprises a Programable Logic Controller, a Single Board Computer and a timer circuit, wherein the Programable Logic Controller is configured to control the positioner, to receive angles data from the positioner, to receive image data from the camera and to send angles data and image data to the Single Board Computer, wherein the timer circuit is configured to receive time information and assign a time stamp to the angles data and to the image data and wherein the Single Board Computer is configured to receive angles data with the time stamp and image data with the time stamp and send the angles data and the image data with their time stamps to the control station;
the control station comprises receiving means to receive information from the Single Board Computer of each operation element and a software configured to run an algorithm configured to calculate a position of an object from the data received from the Single Board Computer of each operation element, wherein the control station is configured to create a reference system comprising the position of each measuring unit.

With this system, the distance is not obtained by a distance sensor located in a measuring unit, but by calculating the crossing point of the different line of sights of each measuring unit. Due to the lack of the distance sensor in each measuring unit, calibration and operation is much easier, and thus the system can be more easily transported and installed in non-prepared locations.

The operation of each measuring unit does not need any complex station, but just a simple operation element with the Programable Logic Controller (PLC) and the Single Board Computer (SBC), which can be easily transported and prepared by a single user, without the need of a complex transport and installation process. The measuring units can be deployed in any location, without the need of a previous preparation of the same.

The time stamp assignment for each data contributes to the use of data coming from different operation elements, but synchronized to provide data which can be usefully processed by the control station to provide the position of the object.

In some particular embodiments, the control station is configured to receive a satellite position of each measuring unit to create the reference system.

The reference system may be created using different data sources. One option may be to locate each measuring unit in predetermined positions, which are previously defined and stored in the control station. In this case, the reference system would be created in advance, making it unnecessary to obtain positioning data of each measuring unit. However, a different option, which may be more interesting, is locate each measuring unit in a non-preestablished location, and then informing the control station about this location, in order to create an *ad hoc* reference system. This information about the location of each measuring unit can be done by means of satellite positioning: in some particular embodiments, each measuring unit comprises a satellite position receptor configured to receive positioning information from a satellite and generate the satellite position.

In some particular embodiments, the system further comprises additional sensors, each additional sensor being configured to send additional data to the Single Board Computer of one of the operation elements or is configured to send additional data directly to the control station, wherein the timer circuit is configured to receive time information and assign a time stamp to the additional data and wherein the Single Board Computer is configured to receive additional data with the time stamp and send the additional data with their time stamps to the control station. In some particular embodiments, the additional sensor comprises at least one of an electromagnetic pulse launcher, a high-speed camera, a radar or a laser rangefinder.

These sensors increase the abilities of the system, which can be configured to take advantage of the trajectory obtention to perform some actions on the object. In some cases, these additional sensors may have their own pedestal, but in other cases, the additional sensors may be installed in the pedestal of the corresponding measuring unit.

In some particular embodiments, the system comprises at least three measuring units.

A higher number of measuring units can be used to improve the accuracy of the trajectory obtention.

In some particular embodiments, the algorithm comprises the steps of:
defining a line of sight from the data received from each measuring unit, thus obtaining one line of sight for each measuring unit;
calculating a preliminary point which minimizes the sum of the squares of the distances to all the lines of sight;
applying a filter to refine the position of the preliminary point, thus obtaining a final point;
converting the position of the final point to a global reference system; and
repeating the steps from pointing each measuring unit, thus obtaining a plurality of final points which are used to define a trajectory of the object.

With these steps, the calculation of each point of the trajectory is optimized for the data provided by the measuring units.

In some particular embodiments, the algorithm uses the previous crossing points as inputs to calculate the subsequent crossing point.

The trend and historical evolution of the trajectory may be used to improve the calculations of the subsequent points.

In some particular embodiments, the two-axis angle positioner of each measuring unit has at least 10⁻⁴ radians of angle measurement accuracy.

This accuracy is suitable for the invention, since it allows the tracking of objects at high distances.

In some particular embodiments, the two-axis angle positioner of each measuring unit has an angular velocity equal to or greater than 100°/s.

This enables the system to follow objects which move at high speeds and short distances.

In some particular embodiments, the Programable Logic Controller of each measuring unit has an Ethernet communication with the corresponding Single Board Computer.

This communication feature is advantageous to increase speed in the data transmission between the Programable Logic Controller and the Single Board Computer.

In some particular embodiments, the camera of each measuring unit has a gigE transmission with the corresponding Single Board Computer.

In some particular embodiments, the camera of each measuring unit is configured to acquire images in the visible spectrum and/or in the infrared spectrum.

In a further inventive aspect, the invention provides a method for obtaining the trajectory of an object, comprising the steps of:
providing a system according to the first inventive aspect;
the control station receives the position of the measuring units, creates a reference system and assign a referenced position to each measuring unit
calibrating the system
pointing each measuring unit so that each measuring unit obtains image data of the same object at the same time
the single board computer of each measuring unit sends the angles data and the image data to the control station
define a line for each measuring unit using the angles data and calculate a preliminary point which minimizes the sum of the squares of the distances to all the lines;
apply a filter to refine the position of the preliminary point, thus obtaining a final point convert the position of the final point to a global reference system
repeat the steps from pointing each measuring unit, thus obtaining a plurality of final points which are used to define a trajectory of the object.

In some particular embodiments, the filter is configured to give weight to the final points which have been obtained previously to the present final point.

The previously calculated trajectory and dynamics of the object is used to predict the next position of the same. If an object is travelling at a speed s, it is unlike (and sometimes impossible) that the speed makes a sudden change, the previous speed and position provides a reliable starting point for the next calculated point of the trajectory, allowing the control station to disregard those results which are not consistent with the previously calculated dynamics.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic view of a system according to the invention.
Figure 2 shows the operation of a system according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

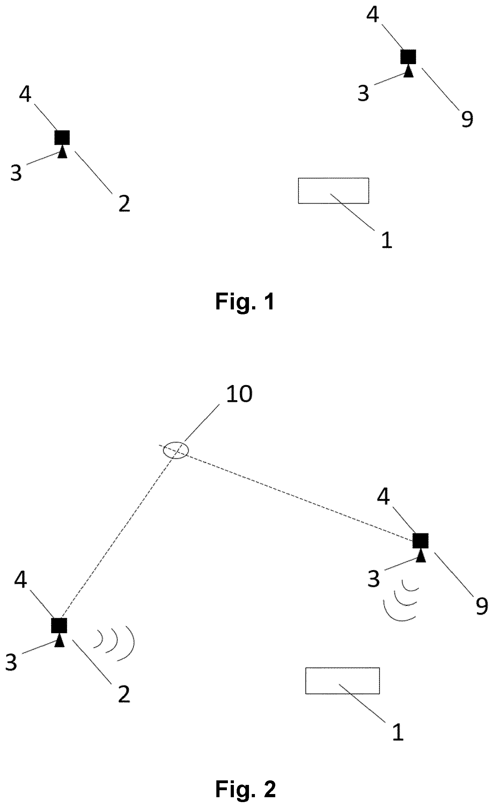

Figure 1 shows a schematic view of a system according to the invention.

This system comprises a control station 1, a first measuring unit 2 and a second measuring unit 9.

Each measuring unit 2, 9 is located in a position which has been chosen by the user, for being especially easy to accede or by any other reason. Each measuring unit 2, 9 comprises a GPS receiver to receive positioning information from a satellite and generate a satellite position. Each satellite position is received by the control station 1 to create a local reference system comprising the position of each measuring unit 2, 9.

Each measuring unit 2, 9 comprises a pedestal 3 and an operation element 4. The pedestal 3 is intended to acquire information about the position of the object, the trajectory of which is to be obtained. To do so, the pedestal 3 comprises a two-angle angular positioner, a camera with a lens and a support structure. The two-angle angular positioner is intended to move in pan and tilt directions to track the object. Hence, angular data are generated by the angular positioner for each instant of time. The angle positioner of each measuring unit has at least 10⁻⁴ radians of angle measurement accuracy, to be able to obtain angular data with a good precision, and an angular velocity equal to or greater than 100°/s, to be able to follow high-speed objects and short distances. The camera is intended to capture images of the object, which are also synchronized with the other data. In turn, the data of each measuring unit are also synchronized, so that the control station 1 receives synchronized information from both measuring units 2, 9.

The operation element 4 of each measuring unit 2, 9 is in charge of communication of data. Each operation element 4 comprises a Programable Logic Controller and a Single Board Computer. The Programable Logic Controller is configured to control the angular positioner, to receive angles data from the angular positioner, to receive image data from the camera and to send angles data and image data to the Single Board Computer. The camera of each measuring unit has a gigE transmission with the corresponding Single Board Computer and the Programable Logic Controller of each measuring unit has an Ethernet communication with the corresponding Single Board Computer. The Single Board Computer is configured to receive angles data and image data from the Programable Logic Controller and send the angles data and the image data to the control station 1.

The control station 1 comprises receiving means to receive information from the Single Board Computer of each operation element and a software configured to run an algorithm configured to calculate a position of an object from the data received from the Single Board Computer of each operation element.

The control station 1 has a processing unit which receives the data from the measuring units and process them to calculate trajectory points. The particular way of obtaining these points will be described later.

In some cases, each measuring unit 2, 9 may comprise additional sensors (such as an electromagnetic pulse launcher, a high-speed camera, a radar or a laser rangefinder). Each additional sensor is configured to send additional data to the Single Board Computer of one of the operation elements or is configured to send additional data directly to the control station.

Figure 2 shows the operation of a system according to the invention.

When the trajectory of an object is to be determined, each measuring unit is pointed towards the object 10. The measuring units are calibrated, to eliminate the influence of possible measuring errors or errors when locating the position of the operation elements.

For each instant where the camera of each measuring unit is seeing the object, values of image and angles of each measuring unit are communicated to the control station via the Single Board Computer of each measuring unit.

These values of images and angles are tagged with a time stamp by means of a timer circuit comprised in each operation element. The time reference is obtained by the timer circuit from a GPS watch, which may provide data, e.g., from the GLONASS system or from the GALILEO system.

Hence, the control station receives:
first data of angles and imaging from the first measuring unit, duly tagged with a time stamp; and
second data of angles and imaging from the second measuring unit, duly tagged with a time stamp.

Once the control station has received the data from the Single Board Computer of each operation element, and due to the fact that each measuring unit has a position in the reference system, the control station is able to define a line for each measuring unit using the angles data and calculate a preliminary point which minimizes the sum of the squares of the distances to all the lines.

Then, a filter, such as a Kalman filter, is applied to the process to refine the position of the preliminary point, thus obtaining a final point. Since the control station is working in its own local reference system, the final point is obtained in this reference system. To obtain a trajectory in global coordinates, the trajectory in the local reference system is converted to a global reference system.

The filter is configured to give weight to the final points which have been obtained previously to the present final point, to speed up the calculation of the new point of the trajectory. On one hand, the previously calculated trajectory and dynamics of the object can be used to predict the next position of the same: since it is unlike (and sometimes impossible) that the speed makes a sudden change, the previous speed and position provides a reliable starting point for the next calculated point of the trajectory. On the other hand, the use of this data allows the control station to disregard those results which are not consistent with the previously calculated dynamics: if the calculations provide a point which implies an uncommon acceleration with respect to the previous points, this point is disregarded.

## Claims

1. System for optic trajectory obtention comprising a control station (1), at least two measuring units (2, 9), wherein
each measuring unit (2, 9) comprises a pedestal (3) and an operation element (4);
each pedestal (3) comprises a two-angle angular positioner, a camera with a lens and a support structure;
each operation element (4) comprises a Programable Logic Controller, a Single Board Computer and a timer circuit, wherein the Programable Logic Controller is configured to control the positioner, to receive angles data from the positioner, to receive image data from the camera and to send angles data and image data to the Single Board Computer, wherein the timer circuit is configured to receive time information and assign a time stamp to the angles data and to the image data and wherein the Single Board Computer is configured to receive angles data with the time stamp and image data with the time stamp and send the angles data and the image data with their time stamps to the control station;
the control station (1) comprises receiving means to receive information from the Single Board Computer of each operation element and a software configured to run an algorithm configured to calculate a position of an object from the data received from the Single Board Computer of each operation element, wherein the control station is configured to create a reference system comprising the position of each measuring unit.

2. System according to claim 1, wherein the control station (1) is configured to receive a satellite position of each measuring unit to create the reference system.

3. System according to claim 1, wherein each measuring unit (2, 9) comprises a satellite position receptor configured to receive positioning information from a satellite and generate the satellite position.

4. System according to any of the preceding claims, further comprising additional sensors, each additional sensor being configured to send additional data to the Single Board Computer of one of the operation elements or is configured to send additional data directly to the control station, wherein the timer circuit is configured to receive time information and assign a time stamp to the additional data and wherein the Single Board Computer is configured to receive additional data with the time stamp and send the additional data with their time stamps to the control station.

5. System according to claim 4, wherein the additional sensor comprises at least one of an electromagnetic pulse launcher, a high-speed camera, a radar or a laser rangefinder.

6. System according to any one of the preceding claims, comprising at least three measuring units.

7. System according to any one of the preceding claims, wherein the algorithm comprises the steps of:
defining a line of sight from the data received from each measuring unit, thus obtaining one line of sight for each measuring unit;
calculating a preliminary point which minimizes the sum of the squares of the distances to all the lines of sight;
applying a filter to refine the position of the preliminary point, thus obtaining a final point;
converting the position of the final point to a global reference system; and
repeating the steps from pointing each measuring unit, thus obtaining a plurality of final points which are used to define a trajectory of the object.

8. System according to claim 7, wherein the algorithm uses the previous crossing points as inputs to calculate the subsequent crossing point.

9. System according to any one of the preceding claims, wherein the two-axis angle positioner of each measuring unit has at least 10⁻⁴ radians of angle measurement accuracy.

10. System according to any one of the preceding claims, wherein the two-axis angle positioner of each measuring unit has an angular velocity equal to or greater than 100°/s.

11. System according to any one of the preceding claims, wherein the Programable Logic Controller of each measuring unit has an Ethernet communication with the corresponding Single Board Computer.

12. System according to any one of the preceding claims, wherein the camera of each measuring unit has a gigE transmission with the corresponding Single Board Computer.

13. System according to any one of the preceding claims, wherein the camera of each measuring unit is configured to acquire images in the visible spectrum and/or in the infrared spectrum.

14. Method for obtaining the trajectory of an object, comprising the steps of:
providing a system according to any of the preceding claims
the control station receives the position of the measuring units, creates a reference system and assign a referenced position to each measuring unit
calibrating the system
pointing each measuring unit so that each measuring unit obtains image data of the same object at the same time
the single board computer of each measuring unit sends the angles data and the image data to the control station
define a line for each measuring unit using the angles data and calculate a preliminary point which minimizes the sum of the squares of the distances to all the lines;
apply a filter to refine the position of the preliminary point, thus obtaining a final point;
convert the position of the final point to a global reference system; and
repeat the steps from pointing each measuring unit, thus obtaining a plurality of final points which are used to define a trajectory of the object.

15. Method according to claim 14, wherein the filter is configured to give weight to the final points which have been obtained previously to the present final point.
